# EUROPÄISCHE PATENTSCHRIFT

(11) **EP 0 587 596 B1**
(45) Veröffentlichungstag und Bekanntmachung des Hinweises auf die Patenterteilung: **12.07.1995**
(21) Anmeldenummer: 92909859.8
(22) Anmeldetag: 02.05.1992
(51) Int. Cl.: B62D 29/00, B62D 27/02

(54) **TRÄGERTEIL FÜR EINE LEICHTMETALLKAROSSERIE EINES KRAFTFAHRZEUGS**
SUPPORT ELEMENT FOR A LIGHT-ALLOY MOTOR-VEHICLE BODY
ELEMENT PORTANT DE LA CARROSSERIE EN METAL LEGER DE VEHICULES A MOTEUR

(30) Priorität: 14.06.1991 DE 4119598
(43) Veröffentlichungstag der Anmeldung: 23.03.1994
(73) Patentinhaber: AUDI AG, 85002 Ingolstadt (DE)
(72) Erfinder: KREIS, Gundolf, D-8072 Oberstimm (DE); TIMM, Heinrich, D-8070 Ingolstadt (DE); FELDSCHMID, Alois, D-8070 Ingolstadt (DE)
(74) Vertreter: Engelhardt, Harald
(86) Internationale Anmeldenummer: EP9200958
(87) Internationale Veröffentlichungsnummer: WO9222454

(56) Entgegenhaltungen:
- EP-A- 0 146 716
- EP-A- 0 399 648
- EP-A- 0 454 942
- WO-A-90/02680
- GB-A- 1 194 499
- GB-A- 1 209 714
- US-A- 2 344 092

## Beschreibung

Die Erfindung betrifft ein Trägerteil für eine Leichtmetallkarosserie eines Kraftfahrzeugs nach dem Oberbegriff des Anspruchs 1.

Ein bekanntes Trägerteil (DE-A- 37 07 554) als Blechkonstruktion für einen Fahrzeugrahmen besteht aus einem oberen, U-förmigen Teil und einem unteren, U-förmigen Teil sowie einem dazwischen angebrachten Versteifungsteil in Form einer gerippten Platte. Die Kämme und Furchen der Platte weisen vorzugsweise ebene Bereiche auf, die durch Versteifungsbereiche miteinander verbunden sind. Die Versteifungsbereiche sind in einem Winkel gegenüber der Querachse des Trägerteils angeordnet. Dadurch soll insbesondere die Biegefestigkeit erhöht werden.

Die Versteifung erfolgt somit durch Wände zwischen den U-förmigen Teilen, die im wesentlichen den gesamten Freiraum zwischen den U-förmigen Teilen einnehmen und die in einem Winkel zur Querachse angeordnet sind. Die Anordnung dient dazu, ein solches Trägerteil gewichtsgünstiger für den normalen, elastischen Belastungsfall auslegen zu können. Bei einem starken Aufprall eines Fahrzeugs treten aber gänzlich andere Beanspruchungen in Form von plastischen Verformungen auf, wobei insbesondere der Querschnitt eines solchen Trägerteils verändert wird. Beim Einfallen des Querschnitts durch eine plastische Verbiegung des Trägerteils wird dessen Steifigkeit sehr stark reduziert. Durch die in einem Winkel gegenüber der Querachse angestellten Versteifungswände wird einem Einfallen des Querschnitts nur unzureichend entgegengewirkt. Solche schräg stehenden Wände zwischen zwei U-förmigen Teilen sind auch nur aufwendig herzustellen und insbesondere an Leichtmetall-Gußteile nicht einfach anzuformen. Solche Versteifungswände müßten dabei in aufwendiger Weise nachträglich eingebracht und fixiert werden.

Bei einem weiter bekannten Trägerteil (EP-A-370342) als Blechkonstruktion ist in einem einseitig offenen Schalenelement zur Versteifung ein aus aneinandergereihten V-Abschnitten bestehendes Kunststoffteil eingesetzt und an den Wänden des Metallelements fixiert. In einer ähnlichen, bekannten Anordnung (DE-C- 38 39 855) werden V-förmige Kunststoffversteifungen nachträglich in einen schalenförmig offenen Tragkörper eingespritzt. Dies dient zur Erhöhung der Biege- und Torsionssteifigkeit gegenüber einem schalenförmigen Trägerteil ohne solche Versteifungen. Wegen der V-förmigen Anordnung kommt den Versteifungen nur eine untergeordnete Bedeutung hinsichtlich einer querschnittserhaltenden Funktion zu.

Bei einem weiter bekannten Trägerteil (EP-A-0 055 398) als Blechkonstruktion sind zwei winkelig abgebogene Blechteile verwendet. An einem dieser Blechteile sind über die Länge in Abständen versetzt dreiecksförmige Verstärkungsbleche eingesetzt und durch Punktschweißen über Schweißflansche verbunden. Wie in dieser Schrift zurecht ausgeführt wird, reißen bei einer Querbelastung diese nur einseitig angebrachten Verstärkungsdreiecke verhältnismäßig bald aus, so daß gemäß der in dieser Schrift weiter beschriebenen Erfindung eine schalenartig in das Hohlprofil eingeschweißte Versteifung vorgeschlagen wird. Weiter sind ähnliche, schalenförmig in Hohlstrukturen von Trägern eingeschweißte Versteifungen bekannt (DE-B-22 54 299), die sich gegenüberliegen und bei einer Belastung gegeneinander abstützen. Solche schalenförmigen Versteifungen mit umschlossenen Hohlbereichen und Hinterschneidungen sind bei Gußteilen aus fertigungstechnischen Gründen nicht machbar.

Zum Aufbau selbsttragender Karosserien mit den vorstehend beschriebenen Trägerteilen werden im Tiefziehverfahren verformte Stahlbleche verwendet. Träger mit Kohlprofilen werden dabei jeweils aus wenigstens zwei tiefgezogenen und miteinander verschweißten Blechen hergestellt. Die Preßwerkzeuge zum Verformen der Bleche sind verhältnismäßig teuer, lassen jedoch hohe Stückzahlen zu, so daß für eine Großserienfertigung damit eine kostengünstige Lösung zur Verfügung steht. Für Kleinserien ist eine solche Karosserieherstellung aufgrund der hohen erforderlichen Werkzeuginvestitionen sehr kostenintensiv.

Es ist daher insbesondere für Kleinserien bekannt (EP-A-0 146 716), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Die Leichtmetall-Gußteile können aus zusammengesetzten Schalen zur Bildung einer Hohlprofilstruktur bestehen. Neben einer kostengünstigeren Lösung für Kleinserien werden mit einer solchen Konstruktion vorteilhaft auch geringere Karosseriegewichte und Verbesserungen beim Korrosionsschutz erreicht.

Ein besonders hoch belastetes Knotenelement in der Bodengruppe einer Leichtmetallkarosserie eines Personenkraftwagens ist das Verbindungsteil zwischen Längsträgerteilen im Vorderwagen und einem aufgrund des Radkastens seitlich dazu versetzten Schweller. Dieses Knotenelement ist zur Überbrückung der VerSetzung Z-förmig auszubilden, wodurch insbesondere bei einem Frontalaufprall kein gerade durchgehender Kraftverlauf möglich ist. Durch die beiden bogenförmig umgelenkten Kraftflüsse im Z-Verlauf besteht gerade hier die Gefahr, daß bei einer starken Belastung eine plastische Verbiegung eintritt, der Trägerquerschnitt einfällt und dadurch die Steifigkeit und die Abstützfunktion schlagartig sehr stark abnehmen.

Es ist allgemein bekannt, an Gußteilen Verstärkungsrippen anzubringen. Diese werden so gelegt, daß entsprechend der Krafteinleitung und des Kraftflusses eine Versteifung des Bauteils und eine Reduzierung der Spannungsspitzen erzielt werden, so daß die Verstärkungsrippen im wesentlichen in der Kraftflußrichtung liegen.

Aufgabe der Erfindung ist es, ein gattungsgemäßes Trägerteil so weiterzubilden, daß bei guter und kostengünstiger Fertigung und Montage die Festigkeit und Steifigkeit bei starken Belastungen verbessert werden.

Diese Aufgabe wird mit den kennzeichnenden Merkmalen des Anspruchs 1 gelöst.

Gemäß Anspruch 1 sind zur Versteifung der Hohlprofilstruktur Versteifungen als im Abstand liegende Verstärkungsrippen an den Innenwänden der beiden schalenförmigen Leichtmetall-Gußteile angeformt. Die Gestalt dieser Verstärkungsrippen und die Anordnung sind so gewählt, daß sich diese als schmale, plattenförmige Stege über einen Großteil des Querschnittverlaufs der Hohlprofilstruktur mit einer Anordnung quer zum Längsverlauf des Trägerteils bzw. quer zum Kraftverlauf erstrecken und mit einer Schmalseite in ihrer Rippenhöhe in den Hohlraum des Trägerteils abstehen.

Bei einer üblichen Trägerauslegung wird dieser hinsichtlich Biegung und Torsion durch eine geeignete Wandstärke und Querschnittswahl optimiert. Die vorgeschlagenen Verstärkungsrippen bringen dabei in der Regel keinen Gewinn an Biege- und Torsionssteifigkeit bei einer üblichen, elastischen Belastung. Bei sehr großen Beanspruchungen, wie beispielsweise im Crashfall bei einem Kraftfahrzeug, treten jedoch plastische Verformungen auf. Mit den erfindungsgemäßen Verstärkungsrippen wird verhindert, daß bei solchen starken Belastungen mit plastischer Verformung der Trägerquerschnitt in sich zusammenfällt und damit die Trägersteifigkeit plötzlich sehr klein wird. Diese querschnittserhaltende Versteifung wird durch die Anordnung der Verstärkungsrippen in einer jeweiligen Querschnittsebene radial, bzw. quer zum Längsträgerverlauf, erreicht. Sollten die Kräfte im Falle eines Fahrzeugcrashs jedoch soweit ansteigen, daß sich ein Verformen des Trägerquerschnitts auch durch die erfindungsgemäße Maßnahme nicht mehr verhindern läßt, nehmen die Verstärkungsrippen vorteilhaft noch zusätzlich Energie auf.

Die Leichtmetall-Gußteile lassen sich bei der vorgeschlagenen Anordnung der Verstärkungsrippen einfach entformen. Da die Verstärkungsrippen bereits bei der Herstellung der Leichtmetall-Gußteile mit angeformt sind, werden dafür die Versteifungen im Gegensatz zu Blechkonstruktionen keine weiteren Arbeitsschritte mehr erforderlich.

Nach Anspruch 2 werden die schalenförmigen Leichtmetall-Gußteile mit Längsflanschen aneinanderliegend verklebt und/oder verschraubt, bevorzugt jedoch verschweißt, wodurch sich eine einfach herstellbare, feste Verbindung ergibt. Im Bereich der Längsflansche sind dann die über den übrigen, gesamten Querschnitt umlaufenden Verstärkungsrippen unterbrochen.

Gemäß Anspruch 3 können besonders vorteilhaft Leichtmetall-Knotenelemente zur Verbindung von Strangprofilen an Längsträgern eines Kraftfahrzeugs hergestellt werden, wobei ein bevorzugt herzustellendes Bauteil das Z-förmige Knotenelement ist, das die Längsträgerteile im Vorderwagen mit einem seitlich dazu versetzten Schweller verbindet und das wegen seiner Z-Form starken Belastungen, insbesondere bei einem Frontalaufprall, ausgesetzt ist.

Anhand einer Zeichnung wird ein Ausführungsbeispiel der Erfindung mit weiteren Einzelheiten, Merkmalen und Vorteilen näher erläutert.

Es zeigen
- Fig. 1: eine Draufsicht auf ein Trägerteil als Verbindungsteil eines vorderen Längsträgers und eines Schwellers an einem Personenkraftwagen und
- Fig. 2: einen Schnitt durch das Trägerteil nach Fig. 1 entlang der Linie A-A.

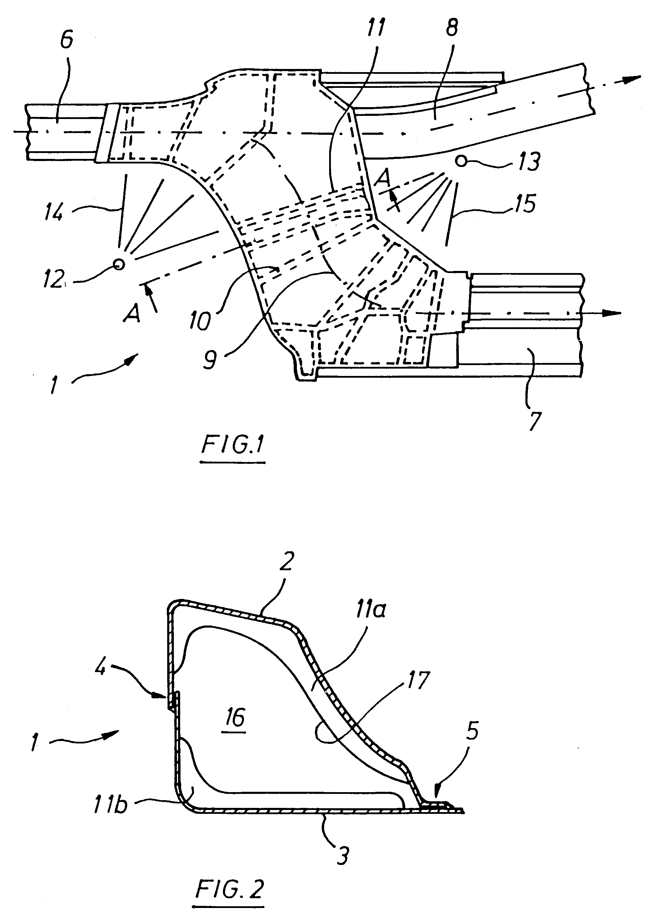

In den Fig. 1 und 2 ist ein Trägerteil 1 dargestellt, das aus zwei schalenförmigen Leichtmetall-Gußteilen 2 und 3 zu einem Hohlprofilträgerteil zusammengesetzt ist. Dazu liegen die beiden Leichtmetall-Gußteile 2 und 3 mit Längsflanschen 4 und 5 aneinander und sind an den Anlageflächen verschweißt.

Das Trägerteil 1 bzw. die Leichtmetall-Gußteile 2 und 3 stellen ein Knotenelement einer Leichtmetall-Karosserie dar, mit dem ein Längsträgerteil 6 im Vorderwagen mit einem seitlich dazu versetzten Schweller 7 verbunden ist. Das Längsträgerteil 6 und der Schweller 7 sind Strangpreßteile, die ebenfalls aus Leichtmetall hergestellt sind. In der Anordnung nach Fig. 1 führt ein weiteres Strangpreßprofil 8 zu einem (nicht dargestellten) Mitteltunnel.

Das Längsträgerteil 6 verläuft in an sich bekannter Weise hinter dem Radhaus versetzt zum Schweller 7 bzw. zur seitlichen Außenfläche des Fahrzeugs. Daher ist es erforderlich, das Knotenelement bzw. das Trägerteil 1 zur Überbrückung dieses Versatzes Z-förmig in der dargestellten Art auszubilden. Bei einem Frontaufprall ist entsprechend der Kraftverlauf durch das Trägerteil 1 Z-förmig umgelenkt, entsprechend der strichpunktierten Linie 9.

Durch die beiden Krümmungen im Kraftverlauf am Tragerteil 1 entsteht bei einem starken Frontaufprall eine Art von Scherbewegung zwischen dem Längsträgerteil 6 und dem Schweller 7 mit hohen Kraftspitzen, die im Trägerteil 1 aufgenommen werden müssen. Die entstehenden Kräfte haben ersichtlich das Bestreben, das Trägerteil 1 an den Biegungen auszuknicken. Bei einer solchen plastischen Verformung besteht die Gefahr, daß dadurch der Querschnitt einfällt und damit wegen der dann fehlenden Hohlstruktur des Trägers dessen Steifigkeit schlagartig auf einen sehr geringen Wert abfällt.

Um ein solches Einfallen des Querschnitts zu verhindern, sind in Abständen liegende Verstärkungsrippen 10, 11, usw. angeformt. Diese Verstärkungsrippen liegen jeweils in einer Querschnittsebene quer oder radial zum Längsverlauf des Trägerteils 1 bzw. zum Kraftverlauf entsprechend der Linie 9. Zur Darstellung des radialen Verlaufs der Verstärkungsrippen 10, 11 sowie der weiter eingezeichneten Verstärkungsrippen sind die Mittelpunkte 12, 13 der Z-Krümmungen eingezeichnet. Die Stellung der Verstärkungsrippen folgt den zugeordneten Radien 14, 15.

In Fig. 2 ist am Beispiel der Verstärkungsrippe 11 deren konkrete Struktur im Hohlraum 16 des Trägerteils 1 gezeigt: Im oberen, schalenförmigen Leichtmetall-Gußteil 2 ist eine Verstärkungsrippe 11a vom Längsflanschbereich 4 zum Längsflanschbereich 5 geführt, wobei die Flanschbereiche frei belassen wurden. Entsprechend ist in der gleichen Querschnittsebene am unteren, schalenförmigen Leichtmetall-Gußteil 3 eine Verstärkungsrippe 11b angeformt. Die Verstärkungsrippenteile 11a und 11b entsprechen somit praktisch einer in einer Querschnittsebene umlaufenden Verstärkungsrippe. Die Rippenteile 11a und 11b sind als plattenförmige Stege mit einer Wandstärke entsprechend der Belastung auf den schalenförmigen Leichtmetall-Gußteilen 2 und 3 ausgeführt. Diese Stege stehen mit einer Schmalseite 17 in den Hohlraum 16. Das Trägerteil 1 enthält somit keine, den Hohlraum 16 unterteilende Wände, sondern weist einen im Längsverlauf durchgehenden Hohlraum 16 auf.

Die dargestellte Trägerteilausführung hat folgende Funktion: Der Querschnitt und die Wandstärken des Trägerteils 1 sind hinsichtlich der Biege- und/oder Torsionssteifigkeit optimiert, wobei die Verstärkungsrippen 10, 11 usw. bei einer normalen, betriebsmäßigen Beanspruchung im elastischen Bereich praktisch keinen Gewinn an zusätzlicher Biege- oder Torsionssteifigkeit bringen. Anders liegen die Beanspruchungen im Crashfall sowohl bei einem Front- als auch bei einem Seitenaufprall. Hierbei treten plastische Verformungen auf, wobei durch die Anordnung der Verstärkungsrippen in Querschnittsebenen etwa radial zum Trägerverlauf bzw. zum Kraftverlauf das Einfallen des Trägerquerschnitts und damit ein praktisch schlagartiges Verschwinden des Abstützwiderstands weitgehend verhindert wird. Wenn bei sehr starken Belastungen dennoch eine Verformung des Trägerquerschnitts auftritt, nehmen die Verstärkungsrippen vorteilhaft zusätzlich Energie auf.

## Patentansprüche

1. Trägerteil für eine Leichtmetallkarosserie eines Kraftfahrzeugs, insbesondere Knotenelement, zur Verbindung eines Längsträgerteils im Vorderwagen mit einem Schweller,
bestehend aus zwei schalenförmigen Leichtmetall-Gußteilen, die zur Bildung eines hohlprofilartigen Trägerteils mit den offenen Bereichen aneinanderliegen und an den Anlagebereichen miteinander verbunden sind,
dadurch gekennzeichnet,
daß zur Versteifung der Hohlprofilstruktur Versteifungen als im Abstand liegende Verstärkungsrippen (10, 11) an den Innenwänden der beiden schalenförmigen Leichtmetall-Gußteile (2, 3) angeformt sind, dergestalt, daß sich die Verstärkungsrippen (10, 11) als schmale, plattenförmige Stege über einen Großteil des Querschnittverlaufs der Hohlprofilstruktur mit einer Anordnung quer zum Längsverlauf (Linie 9) des Trägerteils (1) bzw. quer zum Kraftverlauf erstrecken und mit einer Schmalseite in ihrer Rippenhöhe in den Hohlraum (16) des Trägerteils (1) abstehen.

2. Trägerteil nach Anspruch 1, dadurch gekennzeichnet, daß die schalenförmigen Leichtmetall-Gußteile (2, 3) mit Längsflanschen (4, 5) aneinanderliegen und dort verschweißt und/oder verklebt und/oder verschraubt sind und daß die Verstärkungsrippen (10, 11) über den gesamten Querschnitt an den Innenwänden der Leichtmetall-Gußteile (2, 3) mit Unterbrechungen im Bereich der Längsflansche (4, 5) umlaufen.

3. Trägerteil nach Anspruch 1 oder 2, dadurch gekennzeichnet, daß das Trägerteil (1) in seinem Längsverlauf Z-förmig (Linie 9) ausgeführt ist zur Verbindung eines Längsträgerteils (6) als Leichtmetall-Strangpreßprofil im Vorderwagen mit einem seitlich dazu versetzten Schweller (7) als Leichtmetall-Strangpreßprofil, wobei die Verstärkungsrippen (10, 11) quer zum Z-förmigen Längsverlauf (Linie 9) angeordnet sind.

## Claims

1. Beam member for a light-metal motor vehicle body, more particularly a gusset, for joining a lengthwise beam member at the front of the vehicle to a sill beam,
consisting of two dish-shaped cast light-metal parts which bear with their open regions against one another to form a hollow-profile-type beam member and are joined together at the areas that are in contact,
characterised in that
to reinforce the hollow-profile structure there are arranged reinforcements in the form of spaced strengthening ribs (10, 11) on the inner walls of the two dish-shaped cast light-metal parts (2, 3), in such a manner that the strengthening ribs (10, 11) extend as slender, plate-shaped crosspieces over a large part of the transverse progression of the hollow-profile structure with an arrangement at right angles to the lengthwise progression (line 9) of the beam member (1) and at right angles to the load progression, and protrude by one narrow side at their rib height into the cavity (16) of the beam member (1).

2. Beam element according to claim 1, characterised in that the dish-shaped cast light-metal parts (2, 3) bear with lengthwise flanges (4, 5) against one another and are welded and/or bonded and/or bolted there, and that the strengthening ribs (10, 11) run for the entire cross-section around the inner walls of the cast light-metal parts (2, 3), with breaks in the region of the lengthwise flanges (4, 5).

3. Beam member according to claim 1 or 2, characterised in that the beam member (1) is constructed with a Z-shaped lengthwise progression (line 9) to connect a lengthwise beam member (6) in the form of an extruded light-metal profile at the front of the vehicle to a sill beam (7) in the form of an extruded light-metal profile laterally offset with respect thereto, the strengthening ribs (10, 11) being arranged at right angles to the Z-shaped lengthwise progression (line 9).

## Revendications

1. Elément porteur pour une carrosserie en métal léger d'un véhicule à moteur, en particulier élément de jonction pour relier un longeron de la partie avant de la voiture à un seuil de porte,
se composant de deux pièces moulées en métal léger en forme de coquille qui sont appliquées l'une contre l'autre par leurs parties ouvertes et sont unies l'une à l'autre dans les régions de contact, pour former un élément porteur semblable à un profilé creux,
caractérisé en ce que, pour le raidissement de la structure de profilé creux, des éléments de raidissement sont venus de moulage, sous forme de nervures de renforcement espacées (10, 11), sur les parois internes des deux pièces moulées en métal léger en forme de coquille (2, 3), de telle façon que les nervures de renforcement (10, 11) s'étendent, à la manière de cloisons étroites en forme de plaque, sur une grande partie de l'étendue de la section transversale de la structure de profilé creux, avec une orientation perpendiculaire au tracé longitudinal (ligne 9) de l'élément porteur (1), c'est-à-dire perpendiculaire à la direction des efforts, et qu'elles fassent saillie par le chant, sur toute leur hauteur, dans l'espace vide (16) de l'élément porteur (1).

2. Elément porteur selon la revendication 1, caractérisé en ce que les pièces moulées en métal léger en forme de coquille (2, 3) sont appliquées l'une contre l'autre par des ailes longitudinales (4, 5) au niveau desquelles elles sont soudées et/ou collées et/ou vissées, et en ce que les nervures de renforcement (10, 11) s'étendent tout autour de la section transversale sur les parois internes des pièces moulées en métal léger (2, 3), avec des interruptions dans la région des ailes longitudinales (4, 5).

3. Elément porteur selon la revendication 1 ou 2, caractérisé en ce que l'élément porteur (1) est réalisé avec un tracé longitudinal en forme de Z (ligne 9), pour relier un longeron (6) de la partie avant de la voiture, constitué par un profilé filé en métal léger, à un seuil de porte (7) constitué par un profilé filé en métal léger et décalé latéralement par rapport à ce longeron, les nervures de renforcement (10, 11) ayant une orientation perpendiculaire au tracé longitudinal en Z (ligne 9).
